# EUROPÄISCHE PATENTANMELDUNG

(11) **EP 4 529 774 A1**
(43) Veröffentlichungstag der Anmeldung: **02.04.2025**
(21) Anmeldenummer: 24201834.9
(22) Anmeldetag: 23.09.2024
(51) Int. Cl.: A23K 10/30

(54) **VERFAHREN ZUR HERSTELLUNG EINES TIERFUTTERVORPRODUKTS**

(30) Priorität: 26.09.2023 AT 5014723 U
(71) Anmelder: Neuburger Fleischlos GmbH, 4161 Ulrichsberg (AT)
(72) Erfinder: NEUBURGER, Thomas, 4161 Ulrichsberg (AT)
(74) Vertreter: Burgstaller, Peter

(57) **Zusammenfassung**

Die Erfindung betrifft ein Verfahren zur Herstellung eines Tierfuttervorprodukts, wobei
im ersten Schritt (1) eine Zerkleinerung von Fruchtkörpern eines Pilzes erfolgt, sodass Fruchtkörperstücke vorliegen,
im zweiten Schritt (2) ein Mischen ohne Erhitzung der Fruchtkörperstücke mit den weiteren Zutaten erfolgt, wobei sich die weiteren Zutaten bereits vor den Fruchtkörperstücken in einem Mischgefäß befinden und/oder nachfolgend zugegeben werden, wobei die Fruchtkörperstücke und die weiteren Zutaten zu einer Produktionsmasse (5) verrührt werden,
im dritten Schritt (3) das Abfüllen der Produktionsmasse (5) in zumindest eine Form (7) erfolgt, wobei die Produktionsmasse (5) ohne Erhitzung in der Form (7) aushärtet,
und im vierten Schritt (4) die erhärtete Produktionsmasse (5) tiefgekühlt wird.

## Beschreibung

Die Erfindung betrifft ein Verfahren zur Herstellung eines Tierfuttervorprodukts basierend auf Speisepilzen und deren Fruchtkörpern. Die Erfindung betrifft weiters die Produkte, welche durch das Verfahren hergestellt werden.

Als Tierfuttervorprodukt wird ein Produkt verstanden, welches von einem Vorlieferanten an einen Hersteller von Tierfutter zur weiteren Verarbeitung bereitgestellt wird.

Das gegenständliche Tierfuttervorprodukt umfasst bevorzugt kein tierisches Fleisch.

Die Verwendung von Speisepilzen und deren Fruchtkörpern zur Herstellung von Lebensmitteln ist bekannt, beispielsweise aus dem erteilten Patent EP3292769B1 der Anmelderin.

Die Aufgabe der gegenständlichen Erfindung ist es, ein Tierfuttervorprodukt bereitzustellen, welche aus erprobten und in großen Mengen verfügbaren Rohstoffen herstellbar ist, wobei die fertigen Produkte eine Textur vergleichbar zu Fleisch und Fleischerzeugnissen aufweisen sollen.

Das Tierfuttervorprodukt soll auch die ernährungsphysiologischen Anforderungen des jeweiligen Tieres erfüllen.

Zur Lösung der Aufgabe wird ein Verfahren zur Herstellung eines Tierfuttervorprodukts gemäß Anspruch 1 vorgeschlagen, welches unter Verwendung der Fruchtkörper von Speisepilzen als Hauptrohstoff hergestellt ist.

In einer Ausführungsvariante wird Verfahren zur Herstellung eines Tierfuttervorprodukts vorgeschlagen, umfassend zumindest einen Pilz und entsprechend den Anforderungen des Tieres wählbare weitere Zutaten, wobei
- im ersten Schritt eine Zerkleinerung von Fruchtkörpern des Pilzes erfolgt, sodass Fruchtkörperstücke vorliegen,
- im zweiten Schritt ein Mischen ohne Erhitzung der Fruchtkörperstücke mit den weiteren Zutaten erfolgt, wobei die Fruchtkörperstücke und die weiteren Zutaten zu einer Produktionsmasse verrührt werden,
- im dritten Schritt das Abfüllen der Produktionsmasse in zumindest eine Form erfolgt, wobei die Produktionsmasse ohne Erhitzung in der Form aushärtet,
- und im vierten Schritt die erhärtete Produktionsmasse tiefgekühlt wird.

Die weiteren Zutaten können sich bereits vor den Fruchtkörperstücken in einem Mischgefäß befinden und/oder zeitgleich und/oder nachfolgend zugegeben werden.

Bevorzugt wird, dass das Mischen ohne Erhitzung und das Aushärten ohne Erhitzung bei einer Temperatur ausgewählt aus einem Temperaturbereich von 5°C bis 25°C erfolgt.

Bevorzugt wird, dass
- zuerst Natriumalginat, Calciumsulfat, Diphosphate und Calciumphosphat im Mischgefäß vermischt werden,
- danach Wasser hinzugefügt wird und die Mischung emulgiert wird,
- danach Pilze und optional zusätzliches Gemüse zugemischt werden,
- danach Pflanzenproteine und Calciumsulfat zugemischt werden,
- danach die Mischung mittels eines Vakuumfüllers in Formen abgefüllt wird,
- danach die Mischung in den Formen aushärten gelassen wird,
- danach die ausgehärteten Körper der Mischung aus den Formen gestürzt werden,
- danach die ausgehärteten Körper zu Verkaufs- oder Transporteinheiten zusammengestellt und/oder verpackt werden,
- danach die Verkaufs- oder Transporteinheiten tiefgekühlt werden.

Bevorzugt wird, dass das Emulgieren über eine Zeitspanne von 0,5 bis 8 Minuten erfolgt.

Bevorzugt wird, dass das Aushärteten in der Form über eine Zeitspanne von zumindest einer Stunde, bevorzugt zumindest zwei Stunden, erfolgt. Insbesondere wird bevorzugt, dass das Aushärteten in der Form über eine Zeitspanne von zumindest zehn Stunden erfolgt.

Bevorzugt wird, dass die Fruchtkörperstücke in Form von Stücken mit einer minimalen Erstreckung von zumindest 3 mm und einer maximalen Erstreckung von maximal 25 mm vorliegen.

Bevorzugt wird, dass der Pilz ein Pilz der Gattung Pleurotus oder Agaricus ist.

Bevorzugt wird, dass der Pilz Kräuterseitling (Pleurotus eryngii) ist.

Die Erfindung betrifft zudem ein Tierfuttervorprodukt das nach dem gegenständlichen Verfahren hergestellt ist, wobei diese tiefgefroren ist und rohe Fruchtkörperstücke eines Pilzes enthält.

Bevorzugt wird ein Tierfuttervorprodukt, bei welchem die rohen Fruchtkörperstücke eine Mindestgröße von zumindest 3 mm in jeder Raumrichtung aufweisen.

Bevorzugt umfasst das Verfahren, dass
- zuerst Natriumalginat, Calciumsulfat, Diphosphate und Calciumphosphat in einem Kutter vermischt werden,
- danach Wasser hinzugefügt wird und die Mischung für zumindest 0,5 Minuten emulgiert wird,
- danach Pilze und optional zusätzliches Gemüse zugemischt werden,
- danach Pflanzenproteine und Calciumsulfat zugemischt werden,
- danach die Mischung mittels eines Vakuumfüllers in Formen abgefüllt wird,
- danach die Mischung über mehrere Stunden in den Formen aushärten gelassen wird,
- danach die ausgehärteten Körper aus den Formen gestürzt werden,
- danach die ausgehärteten Körper zu Verkaufs- oder Transporteinheiten zusammengestellt und/oder verpackt werden
- danach die Verkaufs- oder Transporteinheiten gefrostet werden.

Die Masse wird beim gegenständlichen Verfahren nicht erhitzt. Die Pilze werden in Form von rohen Stücken hinzugefügt und bleiben im Prozess stückig und roh. Dadurch, dass die Pilze als Stücke enthalten sind, ergibt sich eine Gleichwertigkeit hinsichtlich des Biss- und/oder Kauverhaltens für das Tier gegenüber einer Fütterung mit Fleisch.

Die weiteren Zutaten und deren Mengen können entsprechend den ernährungsphysiologischen Anforderungen des jeweiligen Tieres gewählt werden, wobei dazu das Fachwissen von mit dem jeweiligen Tier vertrauten Personen herangezogen werden kann.

Bevorzugt wird, dass die Mengen der folgenden Zutaten in folgenden Wertebereichen bezogen auf die Gesamtmasse der zugegebenen Zutaten liegen:
- Natriumalginat: 1,5 - 4,5 Gew.%
- Calciumsulfat: 0,5 - 4 Gew.%
- Diphosphate: 0,1 - 2 Gew.%
- Calciumphosphat: 0,1 - 3 Gew.%
- Pilze: 1 - 60 Gew.%
- Optionales Gemüse: 0 Gew.% oder 1 - 60 Gew.%
- Pflanzenproteine: 1 - 30 Gew.%
- Wasser: 50 - 75 Gew.%

Besonders bevorzugt wird, dass die Mengen der folgenden Zutaten in folgenden Wertebereichen bezogen auf die Gesamtmasse der zugegebenen Zutaten liegen:
- Natriumalginat: 1,5 - 4,5 Gew.%
- Calciumsulfat: 0,5 - 4 Gew.%
- Diphosphate: 0,1 - 2 Gew.%
- Calciumphosphat: 0,1 - 3 Gew.%
- Pilze:6 - 60 Gew.%
- Optionales Gemüse: 0 Gew.% oder 6 - 30 Gew.%
- Pflanzenproteine: 6 - 30 Gew.%
- Wasser: 50 - 75 Gew.%

Vorteilhaft ist die Verwendung von Fruchtkörpern von Speisepilzen als Rohstoff, da diese ein gängiges und erprobtes Lebens- und/oder Futtermittel darstellen und eine ressourcenschonende Alternative zu Fleisch oder anderen tierischen Produkten als Tierfutter darstellen.

Bevorzugt ist der Speisepilz im erfindungsgemäß hergestellten Tierfuttervorprodukt mit einem Anteil von 1 bis 60 Gew% enthalten.

Besonders bevorzugt ist der Speisepilz im erfindungsgemäß hergestellten Tierfuttervorprodukt mit einem Anteil von 6 bis 60 Gew% enthalten.

Bevorzugt werden als Rohstoff die Fruchtkörper von Speisepilzen der Gattung Pleurotus oder Agaricus verwendet. Besonders vorteilhaft ist die Verwendung von Fruchtkörpern von Pleurotus eryngii (Brauner Kräuterseitling) als Rohstoff, da diese Pilze gut in großen Mengen züchtbar sind und das Fleisch des Fruchtkörpers im Vergleich zu anderen Pilzen eine eher feste Konsistenz aufweist.

Das nach dem gegenständlichen Verfahren hergestellte Tierfuttervorprodukt zeichnet sich durch eine Druckfestigkeit und Textur aus, die vergleichbar mit Fleisch oder Fleischprodukten ist, wobei sich durch das erfindungsgemäße Verfahren aus ein und demselben Rohstoff unterschiedliche Texturen herstellen lassen, um die Texturen unterschiedlicher Fleischarten bzw. vom jeweiligen Tier bevorzugten Futterarten nachbilden zu können. Dies erfolgt insbesondere durch Anpassung des Mengenanteils und/oder der Größe der Fruchtkörperstücke des Pilzes.

Die Dichte des fertigen Produktes liegt bevorzugt im Bereich zwischen 0,7 bis 1,8 g/cm³, insbesondere im Bereich von 0,9 bis 1,3 g/cm³, beispielsweise 1,1 g/cm³.

Das besonders bevorzugte Verfahren umfasst zudem die Schritte:
- (falls nötig) Vorbereitung der Pilze (z.B. Reinigen),
- Zerkleinern der Pilze auf Stücke von 3 bis 25 mm bevor diese in den Kutter zugegeben werden.

Die Erfindung wird an Hand von Zeichnungen veranschaulicht:
- Fig. 1:: zeigt ein Prozessfließbild des erfindungsgemäßen Verfahrens.
- Fig. 2:: zeigt das erfindungsgemäße Verfahren mit schematischer Darstellung der wesentlichen Anlagenkomponenten.

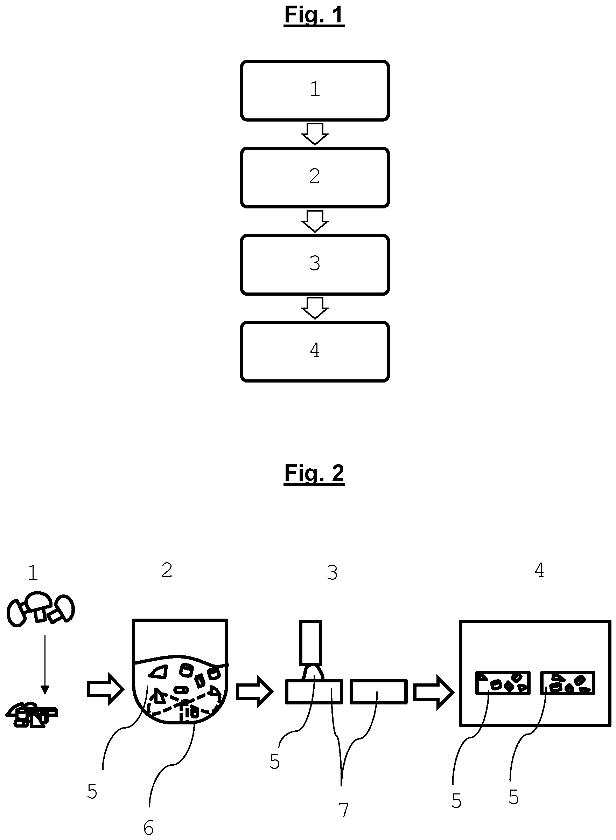

In Fig. 1 und 2 werden einzelnen Verfahrensschritte gezeigt, wobei im ersten Schritt 1 die Zerkleinerung der Fruchtkörper des Pilzes erfolgt, im zweiten Schritt 2 das Mischen der Fruchtkörper mit den weiteren Zutaten erfolgt, die bereits vor den Fruchtkörper im Kutter befindlich sind und/oder nachfolgend zugegeben werden, im dritten Schritt 3 das Abfüllen der Produktionsmasse 5 in zumindest eine Form 7 erfolgt und im vierten Schritt 4 die erhärtete Produktionsmasse 5 tiefgekühlt wird.

Wie in Fig. 2 veranschaulicht, wird im zweiten Schritt 2 die Produktionsmasse 5, bestehend aus zerkleinerten Fruchtkörpern und den weiteren Zutaten, bevorzugt mit einem Kutter 6 für bevorzugt 30 Sekunden bis 8 Minuten bei einer Temperatur von bevorzugt 5 bis 25 °C homogenisiert.

Im Kutter erfolgt dabei keine Zerkleinerung der Zutaten, also auch nicht der Pilze. Der Kutter dient zur Vermengung der Zutaten und kann auch als Mischer bezeichnet werden.

Die weiteren festen Zutaten können in Pulverform zugegeben werden.

Das optional zugebbare weitere Gemüse kann in stückiger Form oder in Pulverform zugegeben werden. Das optionale Gemüse kann je nach Einsatzgebiet entsprechend dem Fachwissen einer mit der Tierart vertrauten Person ausgewählt werden.

Im dritten Schritt 3 wird die Produktionsmasse 5 in zumindest eine Form 7 abgefüllt. Eine bevorzugte Form 7 besteht aus Kunststoff. Bevorzugt hat die Form ein Fassungsvermögen von 13 kg der Produktionsmasse 5. Bevorzugt wird die ausgehärtete Produktionsmasse 5 aus der Form entnommen, bevor diese tiefgekühlt wird.

Im vierten Schritt wird die ausgehärtete Produktionsmasse 5 tiefgekühlt, insbesondere indem diese in einen Tiefkühlraum gegeben wird.

Bevorzugt werden mit dem gegenständlichen Verfahren tiefgekühlte Platten der Produktionsmasse 5 hergestellt.

## Patentansprüche

1. Verfahren zur Herstellung eines Tierfuttervorprodukts, umfassend zumindest einen Pilz und entsprechend den Anforderungen des Tieres wählbare weitere Zutaten, **dadurch gekennzeichnet, dass**
- im ersten Schritt (1) eine Zerkleinerung von Fruchtkörpern des Pilzes erfolgt, sodass Fruchtkörperstücke vorliegen,
- im zweiten Schritt (2) ein Mischen ohne Erhitzung der Fruchtkörperstücke mit den weiteren Zutaten erfolgt, wobei die Fruchtkörperstücke und die weiteren Zutaten zu einer Produktionsmasse (5) verrührt werden,
- im dritten Schritt (3) das Abfüllen der Produktionsmasse (5) in zumindest eine Form (7) erfolgt, wobei die Produktionsmasse (5) ohne Erhitzung in der Form (7) aushärtet,
- und im vierten Schritt (4) die erhärtete Produktionsmasse (5) tiefgekühlt wird.

2. Verfahren nach Anspruch 1, **dadurch gekennzeichnet, dass** das Mischen ohne Erhitzung und das Aushärten ohne Erhitzung bei einer Temperatur ausgewählt aus einem Temperaturbereich von 5°C bis 25°C erfolgt.

3. Verfahren nach Anspruch 1 oder 2, **dadurch gekennzeichnet, dass**
- zuerst Natriumalginat, Calciumsulfat, Diphosphate und Calciumphosphat im Mischgefäß vermischt werden,
- danach Wasser hinzugefügt wird und die Mischung emulgiert wird,
- danach Pilze und optional zusätzliches Gemüse zugemischt werden,
- danach Pflanzenproteine und Calciumsulfat zugemischt werden,
- danach die Mischung mittels eines Vakuumfüllers in Formen abgefüllt wird,
- danach die Mischung in den Formen aushärten gelassen wird,
- danach die ausgehärteten Körper der Mischung aus den Formen gestürzt werden,
- danach die ausgehärteten Körper zu Verkaufs- oder Transporteinheiten zusammengestellt und/oder verpackt werden,
- danach die Verkaufs- oder Transporteinheiten tiefgekühlt werden.

4. Verfahren nach Anspruch 3, **dadurch gekennzeichnet, dass** das Emulgieren über eine Zeitspanne von 0,5 bis 8 Minuten erfolgt.

5. Verfahren nach einem der Ansprüche 1 bis 4, **dadurch gekennzeichnet, dass** das Aushärteten in der Form (7) über eine Zeitspanne von zumindest einer Stunde, bevorzugt zumindest zehn Stunden, erfolgt.

6. Verfahren nach einem der Ansprüche 1 bis 5, **dadurch gekennzeichnet, dass** die Fruchtkörperstücke in Form von Stücken mit einer minimalen Erstreckung von zumindest 3 mm und einer maximalen Erstreckung von maximal 25 mm vorliegen.

7. Verfahren nach einem der Ansprüche 1 bis 6, **dadurch gekennzeichnet, dass** der Pilz ein Pilz der Gattung Pleurotus oder Agaricus ist.

8. Verfahren nach einem der Ansprüche 1 bis 7, **dadurch gekennzeichnet, dass** der Pilz Kräuterseitling (Pleurotus eryngii) ist.

9. Tierfuttervorprodukt hergestellt nach einem Verfahren nach einem der Ansprüche 1 bis 8, **dadurch gekennzeichnet, dass** diese tiefgefroren ist und rohe Fruchtkörperstücke eines Pilzes enthält.

10. Tierfuttervorprodukt nach Anspruch 9, **dadurch gekennzeichnet, dass** die rohen Fruchtkörperstücke eine Mindestgröße von zumindest 3 mm in jeder Raumrichtung aufweisen.
